# EUROPÄISCHE PATENTSCHRIFT

(11) **EP 2 322 363 B1**
(45) Veröffentlichungstag und Bekanntmachung des Hinweises auf die Patenterteilung: **07.08.2013**
(21) Anmeldenummer: 09014769.5
(22) Anmeldetag: 27.11.2009
(51) Int. Cl.: B60D 5/00, B61D 17/22

(54) **Gelenkfahrzeug, z.B. Gelenkbus oder Schienenfahrzeug**
Articulated vehicle, e.g. articulated bus or rail vehicle
Véhicule articulé, par ex. bus à plateforme pivotante ou véhicule sur rail

(30) Priorität: 11.11.2009 EP 09014112
(43) Veröffentlichungstag der Anmeldung: 18.05.2011
(73) Patentinhaber: Hübner GmbH, 34123 Kassel (DE)
(72) Erfinder: Zolotov, Roman, 34123 Kassel (DE)
(74) Vertreter: Walther, Walther & Hinz GbR

(56) Entgegenhaltungen:
- EP-A1- 0 215 329
- EP-A1- 0 329 031
- EP-A1- 0 698 514
- DE-A1- 4 231 323

## Beschreibung

Die Erfindung betrifft ein Gelenkfahrzeug, z. B. einen Gelenkbus oder ein Schienenfahrzeug, umfassend mindestens zwei Fahrzeugteile.

Insbesondere im Schienenfahrzeugbereich ist bekannt, einzelne Waggons lediglich durch Kupplungen miteinander zu verbinden, wobei ein Übergang zwischen den einzelnen Fahrzeugen durch Personen nicht vorgesehen ist. Wenn die Fahrzeuge lediglich durch eine Kupplung miteinander verbunden sind, ist ein Durchtritt zwischen den Fahrzeugen möglich. Dies gilt insbesondere, wenn sich auf der Kupplung, was häufig der Fall ist, eine Kupplungsplatte befindet, die lediglich dazu gedacht ist, dem Bedienungspersonal das Hinüberwechseln oder das Aufstehen auf der Kupplung zu ermöglichen. Es hat sich nun allerdings herausgestellt, dass diese Kupplungsplatte bzw. auch die Kupplung selbst dazu genutzt wird, um zwischen den Fahrzeugen auf der Kupplung an der Fahrt teilzunehmen. Dieses sogenannte 'Surfen' hat zu vielen Unfällen geführt.

Es hat sich allerdings auch herausgestellt, dass nicht nur absichtlich der Zwischenraum zwischen zwei Fahrzeugteilen oder Fahrzeugen durch Personen belegt wird, sondern es auch, insbesondere bei Gedränge auf dem Bahnsteig, dazu kommen kann, dass Personen unbeabsichtigt in den Bereich dieses Zwischenraums gelangen und auf das Gleisbett fallen.

Darüber hinaus sind sogenannte Gelenkfahrzeuge bekannt, die neben einem Gelenk auch durch einen Übergang miteinander verbunden sind, wobei der Übergang einen tunnelartigen Balg umfasst sowie eine Übergangsbrücke, um Personen das Hinüberwechseln von einem Fahrzeugteil in das andere Fahrzeugteil zu ermöglichen. Bei einem Übergang zwischen zwei gelenkig miteinander verbundenen Fahrzeugen ist es so, dass häufig ein seitlicher Abstand zwischen dem Balg des Übergangs und der Seitenwand des Fahrzeugs besteht. Dieser Abstand ist zugegebenermaßen bei einem Fahrzeug mit einem einen Balg umfassenden Übergang nicht besonders groß, er ist aber dennoch vorhanden.

Insbesondere bei Gedränge ist es nun so, dass teilweise mit dem Gewicht einer Person oder mehrerer Personen gegen eine solche Balgseitenwand gedrückt wird, was die Gefahr mit sich bringt, da eine solche Balgseitenwand extrem nachgiebig ausgebildet ist, eine solche an der Balgseitenwand anliegende Person dennoch möglicherweise auf das Gleisbett fallen könnte. Das heißt, die Balgseitenwand muss zwar in sich flexibel und nachgiebig sein, um den bei der Fahrt der Fahrzeuge auftretenden Fahrbewegungen, insbesondere Nick-, Wank- und Knickbewegungen, nachgeben zu können, sie muss aber dennoch so ausgestaltet sein, dass sie insoweit steif ist, dass sie den üblichen Kräften, wie sie auftreten, wenn Personen mit ihrem Gewicht gegen eine solche Balgseitenwand drücken, nicht nachgibt.

In diesem Zusammenhang sind aus dem Stand der Technik Bälge bekannt, die an der Seitenwand eine sogenannte Spurfugenabdeckung aufweisen. Der Spurfugenabdeckbalg dient der Abdeckung der Spurfuge zwischen einer Scheibe einer Übergangsplattform und dem die Scheibe umgebenden Bodenbereich des Fahrzeugs oder auch dem Balg, wie dies an sich bekannt ist. Die Spurfugenabdeckung stellt sich in der Form einer Schürze dar, die sich über die Länge des Falten- oder Wellenbalges des Übergangs erstreckt. Eine solche Spurfugenabdeckung ist beispielsweise aus der DE 4231323 A1 bekannt, wobei in dieser Schrift ein Balg gezeigt ist, der zwei Balghälften aufweist, die mittig durch einen sogenannten Mittelrahmen verbunden sind. Am Mittelrahmen befindet sich der Rahmen einer Spurfugenabdeckung, wobei dieser Rahmen, der an dem Mittelrahmen des Balges angeordnet ist, allerdings nicht dazu dienen kann, den Balg als solchen auszusteifen. Eine ganz ähnliche Konstruktion zeigt die EP 0215329 A1; allen diesen Spurfugenabdeckungen ist gemein, dass die als Schürze ausgebildete Spurfugenabdeckung selbst aus mehreren Rahmen besteht, die kastenförmig auskragend an der Seitenwand des Balges angeordnet sind. Die Fixierung dieser Rahmen an den Falten oder Wellen der Seitenwand erfolgt derart, dass diese Rahmen unmittelbar mit den eine Welle oder Falte bildenden beiden Tuchabschnitten verbunden sind. Die zuvor beschriebene Konstruktion ergibt sich im Einzelnen aus der EP 0698514 A1. Dort sind Rahmenleisten vorgesehen, die kastenförmig auskragend an der Balgseitenwand befestigt sind. Diese Rahmenleisten weisen anschließend an die kastenförmige Auskragung gerade verlaufende Rahmenabschnitte auf, und zwar zu beiden Enden, mit denen die Rahmenleiste auf einer weiteren Trägerleiste fixierbar ist. Diese Trägerleiste weist eine im Querschnitt U-förmige Aufnahme auf, die der klemmbaren Aufnahme der Stoffbahnen zweier Falten oder Wellen dient. Das heißt, dass der Spurfugenabdeckbalg selbst nicht mit den Balgrahmen der Balgseitenwand unmittelbar in Verbindung steht, sondern lediglich mittelbar durch jeweils die beschichteten Stoffbahnen zweier Falten oder Wellen.

Die Trägerleiste zeigt hierbei eine Höhe, die in etwa der Höhe der Rahmenleiste der Spurfugenabdeckung entspricht. Endseitig sind sowohl die Trägerleiste als auch die Rahmenleiste jeweils durch eine Kappe miteinander verbunden. Das heißt, dass die Trägerleiste sich entsprechend nur über den Teil der Höhe der Seitenwand erstreckt, über den sich auch die Spurfugenabdeckung erstreckt.

Die der Erfindung zugrunde liegende Aufgabe besteht demzufolge darin, für eine Aussteifung einer Balgseitenwand zu sorgen.

Zur Lösung der Aufgabe dienen die Merkmale des Anspruchs 1.

Zur Versteifung der Balgseitenwand in Richtung quer zur Mittellängsachse des Fahrzeugs ist ein Balgansatz vorgesehen , der an der Balgseitenwand angeordnet ist, und sich quer zur Längsachse des Fahrzeugs in Richtung auf die Mittellängsachse des Fahrzeugs mit seiner Oberseite im Wesentlichen horizontal verlaufend zu erstreckt. Ein solcher zunächst horizontal verlaufender Balgansatz bildet in Verbindung mit den die einzelnen Falten- oder Wellen der Balgseitenwand, die durch im Querschnitt U-profilförmige Rahmenleisten gehalten sind, eine Balgseitenwand, die sowohl ausreichend stabil ist, dass sie in der Lage ist, horizontal von außen auf die Balgseitenwand einwirkenden Kräften in der Größenordnung von bis zu 3000 N standzuhalten. Insbesondere durch eine im Wesentlichen horizontal verlaufende bauchartige Ausbildung des Balgansatzes wird hier eine erhebliche Steifigkeit der Balgseitenwand als solche erreicht. Der Balgansatz weist über seine Länge bauchartig gebogene, im Querschnitt U-profilförmige Rahmenleisten auf, die untereinander durch Falten oder Wellen miteinander verbunden sind. Die einzelnen Falten oder Wellen zeigen üblicherweise ein mit Kunststoff beschichtetes Gewebe. Der Aufbau eines solchen Falten- oder Wellenbalgs ist nun derart, dass die einzelnen Falten oder Wellen aus einem solchen beschichteten Gewebe durch Rahmenleisten im Bereich des Übergangs von einer Falte oder Welle zur nächsten Falte oder Welle gehalten sind. Insofern sind auch die Rahmenleisten des bauchartig ausgebildeten Ansatzes untereinander durch Falten oder Wellen aus einem beschichteten Gewebe verbunden.

Auch dadurch, dass erfindungsgemäß die Rahmenleisten, die einerseits den Balgansatz bilden, und andererseits aber unmittelbarer Bestandteil der

Balgseitenwand sind, sich über die Höhe der Balgseitenwand erstrecken, und die Übersetzungsprofile, die sich in gleicher Weise über die Höhe der Balgseitenwand erstrecken, und die mit den Rahmenleisten unmittelbar verbunden sind, wird die gewünschte Steifigkeit des Balges im Bereich der Balgseitenwand erzielt.

Des Weiteren ist vorgesehen, dass die Rahmenleisten des Balgansatzes jeweils endseitig durch Rahmenleisten, auch als Übersetzungsprofile bezeichnet, der Balgseitenwand erfasst sind, wodurch sich, wie bereits an anderer Stelle erläutert, ein in sich stabiles kastenförmiges Gebilde oder eine in sich geschlossene Kontur ergibt. Die Übersetzungsprofile erstrecken sich als Rahmenleisten ebenso über diegesamte Höhe der Balgseitenwand, wie die Rahmenleisten des Balgansatzes.

Vorteilhafte Merkmale und Ausgestaltungen ergeben sich aus den Unteransprüchen.

Im Einzelnen ist in Bezug auf die Anordnung der Falten oder Wellen in dem Balgansatz vorgesehen, dass die Rahmenleisten die Falten oder Wellen des Balgansatzes über ihre gesamte Länge durchgehend erfassen. An dieser Stelle sei darauf hingewiesen, dass die Verbindung der einzelnen Rahmenleisten des Balgansatzes durch ein solches beschichtetes Gewebe schlussendlich erst die gewünschte Steifigkeit herbeiführt, da die einzelnen Balgrahmen dann zwar immer noch elastisch nachgiebig miteinander in Verbindung stehen, allerdings die Relativbewegung der einzelnen Rahmenleisten zueinander durch die sie verbindenden Stoffbahnen als Falten oder Wellen begrenzt sind. Die Steifigkeit wird aber auch durch die im Wesentlichen horizontale Ausbauchung als Balgansatz gefördert. Das heißt, die Balgseitenwand ist einschließlich des Balgansatzes durchaus in der Lage, den auftretenden Fahrbewegungen nachzugeben, sie erzeugt jedoch bei einem horizontalen Kraftangriff von außen auf die Seitenwand eine hinreichende Stabilität, um zu verhindern, das Personen auf das Gleisbett gelangen können. Es wurde bereits an anderer Stelle erläutert, dass die einzelnen Rahmenleisten des Balgansatzes durchgängig durch ein beschichtetes Gewebe als Falte oder Welle miteinander in Verbindung stehen. Es besteht allerdings auch die Möglichkeit, die einzelnen die Rahmenleisten verbindenden Falten oder Wellen nur abschnittsweise vorzusehen. Das heißt, die Rahmenleisten des Balgansatzes nehmen lediglich über ihre Länge abschnittsweise Falten- oder Wellenstücke auf, wobei immer noch eine Begrenzung des Verschiebeweges einzelner Rahmenleisten relativ zueinander bewirkt wird.

Nach einem weiteren Merkmal erfassen die Rahmenleisten des Balgansatzes im Bereich der Balgseitenwand auch die Wellen und Falten der Balgseitenwand, und zwar über die gesamte Höhe der Balgseitenwand

Das heißt, dass sich die Rahmenleisten des Balgansatzes bis in die Enden der Balgseitenwand erstrecken. Im Bereich der Ausbauchung des Balgansatzes sind in Bezug auf die Fixierung der einzelnen Falten oder Wellen sogenannte Einlegeleisten vorgesehen, die insofern in etwa der Höhe des bauchartigen Balgansatzes entsprechen. Um nun im Einzelnen das kastenförmige Gebilde zu schaffen, das eingangs bereits Erwähnung gefunden hat, sind sowohl die Rahmenleisten des Balgansatzes als auch die Einlegeleisten durch das im Querschnitt U-förmige Übersetzungsprofil erfasst, das sich insofern über die Höhe der Balgseitenwand erstreckt.

Der Balgansatz an der Balgseitenwand beginnt etwa in der Mitte der Höhe der Balgseitenwand und endet im unteren Bereich der Balgseitenwand. Dies auch deshalb, weil der Kraftangriff meistens etwa in der Mitte der Seitenwand erfolgt.

Zur weiteren Erhöhung der Stabilität der Balgseitenwand ist vorgesehen, dass die einzelnen Rahmenleisten des Balgansatzes im Einbauzustand im oberen Bereich auf die Balgseitenwand zugerichtete Laschen aufweisen, durch die ein elastisches Zugmittel (Expander) geführt ist, das endseitig mit den Stirnseiten der Fahrzeugteile verbunden ist. Erfolgt nun von außen eine Krafteinwirkung in der im Wesentlichen horizontalen Richtung auf die Balgseitenwand, dann wird auch durch das elastische Zugelement einer solchen Krafteinwirkung ein gewisser Widerstand entgegengesetzt.

Um zu verhindern, dass eine solche Balgseitenwand durchhängt, ist nach einem weiteren Merkmal der Erfindung vorgesehen, dass eine der mittigen Rahmenleisten des Balgansatzes durch ein elastisches Zugglied beidseitig mit der jeweiligen Stirnseite des Fahrzeugteils verbunden ist. Hieraus wird deutlich, dass die Balgseitenwand in der Mitte elastisch nachgiebig abgefangen ist.

Nach einem weiteren Merkmal der Erfindung ist ein Spannseil vorgesehen, das im Wesentlichen horizontal verlaufend, mindestens eine der mittleren Rahmenleisten des Balgansatzes mit den Stirnseiten der Fahrzeugteile verbindet. Hierbei erfolgt vorzugsweise die Anbindung des Spannseils im Bereich der größten Ausbauchung des Balgansatzes. Erfolgt eine Krafteinwirkung erheblichen Ausmaßes von außen auf die Balgseitenwand, dann hat die Balgseitenwand das Bestreben, nach innen, d. h. in Richtung auf die Mittellängsachse des Fahrzeugs zu auszubauchen. Um hier eine Begrenzung vorzusehen, ist dieses dreieckförmig abgespannte Spannseil vorgesehen, das insofern die Ausbauchung der Balgseitenwand in Richtung auf die Mittellängsachse des Fahrzeugs begrenzt. Da eine solche Balgseitenwand den unterschiedlichsten Fahrbewegungen wie Wank-, Knick- und Nickbewegungen nachgeben muss, liegt im Ausgangszustand das Spannseil biegeschlaff im Bereich des ausgebauchten Balgansatzes. Lediglich unter Krafteinwirkung wird sich entsprechend der Verformung der Balgseitenwand das Spannseil straffen.

Eine solche Balgseitenwand zu beiden Seiten der Fahrzeuglängsachse bewirkt im Übrigen auch eine Verminderung des Luftwiderstands durch eine Wirbelbildung zwischen den Fahrzeugteilen.

Anhand der Zeichnungen wird die Erfindung nachstehend beispielhaft näher erläutert.
- Fig. 1: zeigt eine perspektivische Darstellung auf die Stirnseite eines Fahrzeugteils, wobei lediglich eine von zwei Seitenwänden dargestellt ist;
- Fig. 2: zeigt die Seitenwand in einer perspektivischen Darstellung mit dem Balgansatz mit durchgängigen Wellen;
- Fig. 3: zeigt eine Darstellung gemäß Fig. 2, wobei sowohl der Verlauf des Zugelements als auch des Spannseils und auch des Zugglieds erkennbar ist;
- Fig. 4: zeigt eine Ausführungsform gemäß Fig. 2, wobei die Wellen zwischen den einzelnen Rahmenleisten allerdings lediglich abschnittsweise vorhanden sind;
- Fig. 5: zeigte eine Darstellung gemäß Fig. 4 in einer Seitenansicht;
- Fig. 6: zeigt die Anordnung und den Verlauf der Rahmenleisten des Balgansatzes, des Einlegeprofiles und des Übersetzungsprofiles, das schlussendlich das Einlegeprofil und die Rahmenleiste des Balgansatzes erfasst.

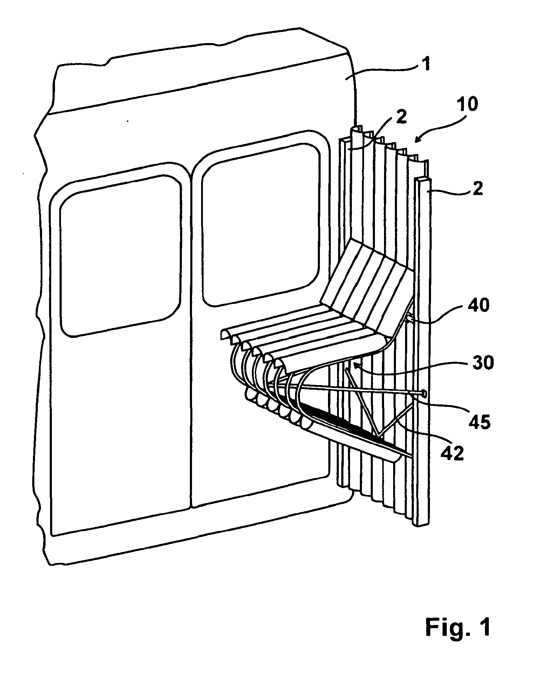

Gemäß Fig. 1 ist die Stirnseite des Fahrzeugteiles mit 1 bezeichnet. An der Stirnseite 1 des Fahrzeugteiles befindet sich ein Verbindungsprofil 2 zur Aufnahme der mit 10 bezeichneten einen Balgseitenwand. Ein solches Verbindungsprofil 2 befindet sich auch am gegenüberliegenden Ende der Balgseitenwand 10 zur Verbindung mit der Stirnseite des gegenüberliegenden Fahrzeugteils (nicht dargestellt). Die insgesamt mit 10 bezeichnete Balgseitenwand weist den Balgansatz 30 auf, der sich in Richtung auf die Mittellängsachse des Fahrzeugs ausbauchend zu erstreckt.

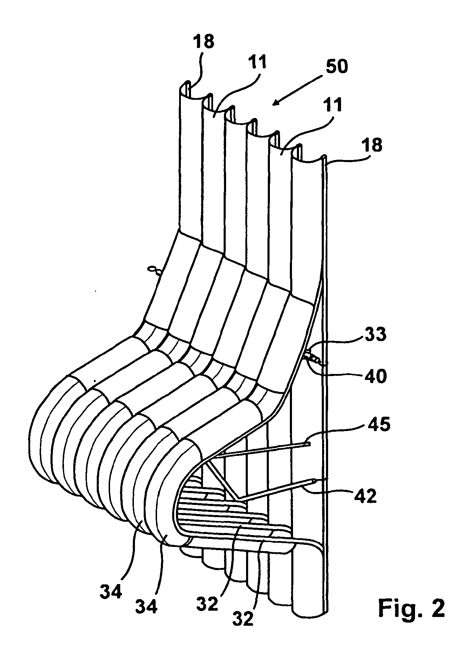

Gegenstand der Erfindung ist nun die Balgseitenwand 10 mit dem Balgansatz 30, wie er beispielsweise in einer Ausführungsform in Fig. 2 dargestellt ist. Die mit 10 bezeichnete Balgseitenwand nimmt den Balgansatz 30 auf. Der Balgansatz 30 umfasst einzelne Rahmenleisten 32, die bauchförmig gebogen sind, und in die Balgseitenwand einlaufen, wie sich dies unmittelbar in Anschauung in Fig. 2 ergibt. Die einzelnen Rahmenleisten 32 sind untereinander durch Wellen 34 aus beschichtetem Gewebe miteinander verbunden. Die Wellen 34 erstrecken sich hierbei über die gesamte Länge der Rahmenleisten 32.

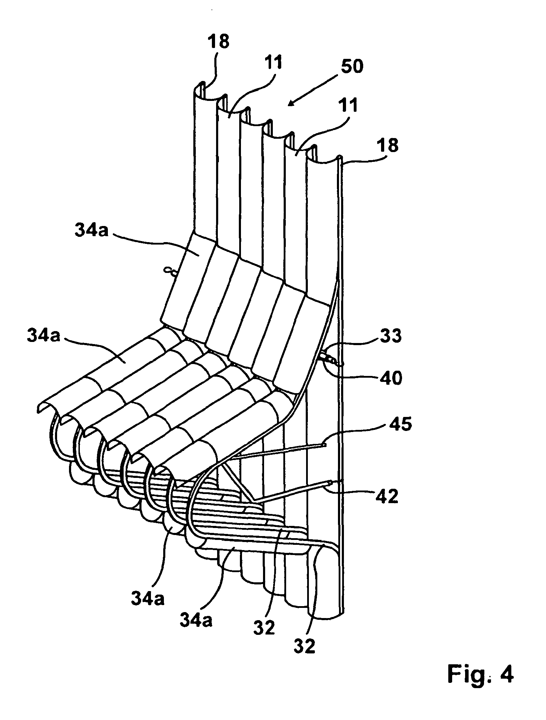

Bei der Ausführungsform gemäß Fig. 4 sind hingegen die Wellen nicht durchgängig von den Rahmenleisten 32 aufgenommen, sondern lediglich abschnittsweise Wellenelemente 34a vorgesehen, die allerdings immer noch die Aufgabe erfüllten, die Relativbewegung der Rahmenleisten 32 des Balgansatzes 30 bei Belastung von außen auf die Balgseitenwand in Richtung des Pfeils 50 zu begrenzen. Die Wellenelemente 34a sind vorzugsweise auf der Ober- und Unterseite der Rahmenleisten 32 angeordnet. Vorzugsweise schließt sich eines an die entsprechende Welle der Balgseitenwand an, sodass im Übergang von der entsprechenden Welle der Balgseitenwand zum Balgansatz ein Wellenelement 34a vorgesehen ist. Auch dies erhöht im Übrigen die Stabilität der Balgseitenwand.

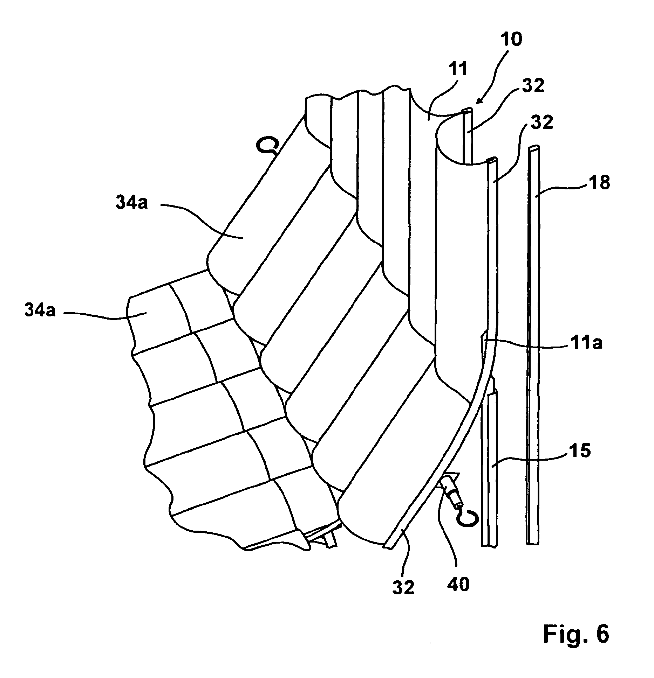

Bei Betrachtung von Fig. 6 ergibt sich Folgendes:
Die Rahmenleisten 32 laufen, wie bereits ausgeführt, in die Balgseitenwand 10 ein. Hierzu weisen die Wellen 11 der Seitenwand entsprechende Durchbrüche 11a auf. Die Rahmenleisten 32 erfassen die Wellen 11 der Balgseitenwand 10, was bedeutet, dass sich die Rahmenleisten 32 bis in die Enden der Balgseitenwand 10 erstrecken. Im Bereich der Ausbauchung des Balgansatzes ist eine die Wellen 11 der Balgseitenwand erfassende Einlegeleiste 15 vorgesehen. Um nunmehr ein stabiles rahmenförmiges Gebilde bereitzustellen, ist ein sogenanntes Übersetzungsprofil 18 vorgesehen, das sowohl die Rahmenleiste 32 als auch die Einlegeleiste 15 formschlüssig erfasst. Insofern ist auch das Übersetzungsprofil 18 im Querschnitt U-profilförmig ausgebildet, und wird sowohl auf die Rahmenleiste 32 als auch auf die Einlegeleiste 15 aufgeklemmt.

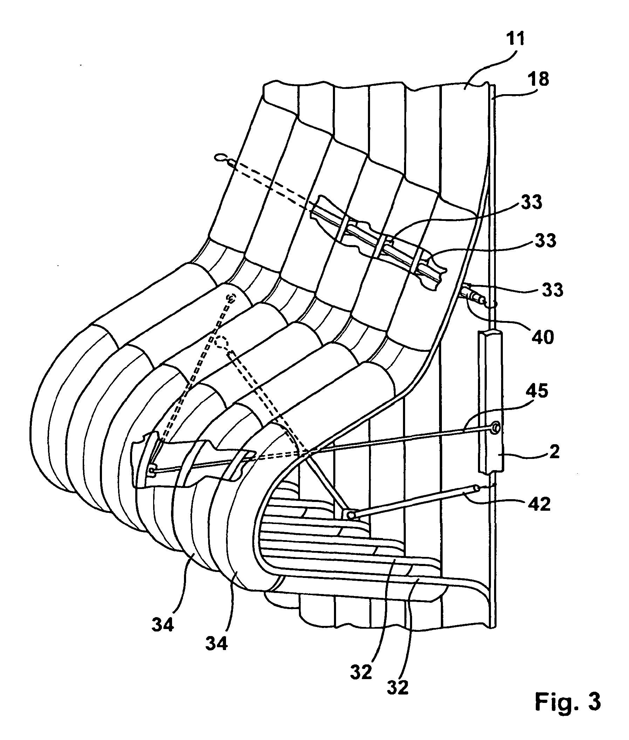

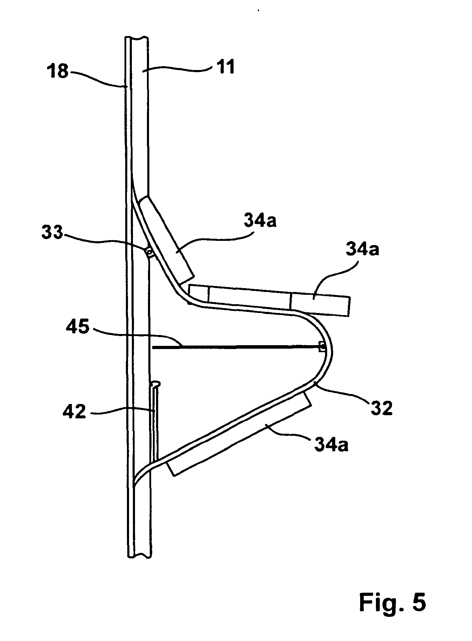

Im oberen Bereich des Balgansatzes 30 weisen die einzelnen Rahmenleisten 32 Laschen 33 auf, durch ein elastisches Zugelement 40 (Expander) geführt ist, das endseitig an der Stirnseite des Fahrzeugteils befestigt ist (Fig. 3, Fig. 5). Ein solcher Expander 40 sorgt dafür, dass bei Krafteinwirkung in Richtung des Pfeils 50 hierdurch ein Widerstand aufgebaut wird. Um ein Durchhängen der Balgseitenwand zu verhindern, ist das elastische Zugglied 42 vorgesehen, das einen mittleren Balgrahmen 32 erfasst, und hierdurch die gesamte Balgseitenwand an den Stirnseiten der Fahrzeugteile etwa mittig abgehängt ist. Auch dieses Zugglied ist elastisch nachgiebig ausgebildet.

Des Weiteren ist ein sogenanntes Spannseil 45 vorgesehen, das im Wesentlichen unelastisch ist, und das eine der mittleren Rahmenleisten 32 des Balgansatzes 30 im Bereich der größten Ausbauchung erfasst, und mit der jeweiligen Stirnseite des Fahrzeugteiles verbindet. Ein solches Spannseil dient als Verformungsbegrenzer der Balgseitenwand bei Krafteinwirkung in Richtung des Pfeiles 50.

## Patentansprüche

1. Gelenkfahrzeug, z. B. Gelenkbus oder Schienenfahrzeug, umfassend mindestens zwei gelenkig miteinander verbundene Fahrzeugteile, wobei zur Überbrückung des Abstandes der beiden Fahrzeugteile im Bereich der Seitenwände der Fahrzeugteile zu beiden Seiten jeweils eine Balgseitenwand vorgesehen ist, die sich von der Stirnseite des einen Fahrzeugteils zur Stirnseite des anderen Fahrzeugteils erstreckt, wobei die Balgseitenwand (10) auf ihrer Innenseite zur Versteifung der Seitenwand in Richtung quer zur Längsachse des Fahrzeugs einen Balgansatz (30) mit über seine Länge bauchartig gebogenen im Querschnitt U-profilförmigen Rahmenleisten (32) aufweist,
wobei die Rahmenleisten (32) des Balgansatzes (30) endseitig durch Übersetzungsprofile (18) der Balgseitenwand derart erfasst sind, dass sich eine geschlossene Kontur ergibt, wobei die Rahmenleisten (32) des Balgansatzes (30) die Falten oder Wellen (11) der Balgseitenwand im Übergang von einer Welle oder Falte zur benachbarten Welle oder Falte über die Höhe der Balgseitenwand (10) erfassen,
wobei sich die Übersetzungsprofile (18) über die gesamte Höhe der Seitenwand (10) erstrecken.

2. Gelenkfahrzeug nach Anspruch 1,
**dadurch gekennzeichnet,**
**dass** die Rahmenleisten (32) des Balgansatzes (30) Falten- oder Wellen (34) über ihre gesamte Länge durchgehend erfassen

3. Gelenkfahrzeug nach Anspruch 1,
**dadurch gekennzeichnet,**
**dass** mehrere Falten- oder Wellenbalgstücke (34a) durch die Rahmenleisten entlang der Länge der Rahmenleisten des Balgansatzes (30) erfasst sind.

4. Gelenkfahrzeug nach einem der voranstehenden Ansprüche,
**dadurch gekennzeichnet,**
**dass** die Rahmenleisten (32) der Balgseitenwand (10) im Bereich des bauchförmigen Balgansatzes durch Einlegeleisten (15) gebildet sind.

5. Gelenkfahrzeug nach Anspruch 4,
**dadurch gekennzeichnet,**
**dass** sowohl die Rahmenleisten (32) des Balgansatzes (30) als auch die Einlegeleisten (15) durch das im Querschnitt U-profilförmige Übersetzungsprofil (18) erfasst sind.

6. Gelenkfahrzeug nach einem der voranstehenden Ansprüche,
**dadurch gekennzeichnet,**
**dass** die einzelnen Rahmenleisten (32) des Balgansatzes (30) im Einbauzustand im oberen Bereich des Balgansatzes (30) auf die Balgseitenwand (10) zugerichtete Laschen (33) aufweisen, durch die ein elastisches Zugelement (40) geführt ist, das endseitig mit den Stirnseiten der Fahrzeugteile verbunden ist.

7. Gelenkfahrzeug nach einem der voranstehenden Ansprüche,
**dadurch gekennnzeichnet,**
dass eine der mittigen Rahmenleisten (32) des Balgansatzes (30) durch ein elastisches Zugglied (42) beidseitig mit der jeweiligen Stirnseite des Fahrzeugteils verbunden ist.

8. Gelenkfahrzeug nach einem der voranstehenden Ansprüche,
**dadurch gekennzeichnet,**
**dass** ein Spannseil (45) vorgesehen ist, das im Wesentlichen horizontal verlaufend mindestens eine der mittleren Rahmenleisten (32) des Balgansatzes (30) mit den Stirnseiten der Fahrzeugteile verbindet.

9. Gelenkfahrzeug nach Anspruch 8,
**dadurch gekennzeichnet,**
**dass** die Anbindung des Spannseils (45) im Bereich der größten Ausbauchung des Balgansatzes (39) erfolgt.

## Claims

1. An articulated vehicle, for instance an articulated bus or rail vehicle, comprising at least two vehicle parts articulately connected to each other, wherein respectively one bellows side wall is disposed on both sides in the area of the side walls of the vehicle parts for bridging the gap between the two vehicle parts, said bellows side wall extending from the front side of one of the vehicle parts to the front side of the other vehicle part, wherein the bellows side wall (10) has on its inner side a bellows appendage (30) with frame bars (32) bent along its length in a billowy manner with a U-profile shaped cross section for stiffening the side wall in the transverse direction to the longitudinal axis of the vehicle, wherein the frame bars (32) of the bellows appendage (30) are caught at their end by transition profiles (18) of the bellows side wall in such a manner that a closed contour is formed, wherein the frame bars (32) of the bellows appendage (30) catch the folds or waves (11) of the bellows side wall in the transition from one wave or fold to the neighboring wave or fold along the height of the bellows side wall (10), wherein the transition profiles (18) extends along the entire height of the side wall (10).

2. The articulated vehicle according to claim 1,
**characterized in that**
the frame bars (32) of the bellows appendage (30) capture the waves or folds (34) along their entire length in a continuous manner.

3. The articulated vehicle according to claim 1,
**characterized in that**
several folded or wave bellows pieces (34a) are captured by the frame bars along the length of the frame bars of the bellows appendage (30).

4. The articulated vehicle according to one of the afore-mentioned claims,
**characterized in that**
the frame bars (32) of the bellows side wall (10) are formed in the area of the billowy bellows appendage by inlaid bars (15).

5. The articulated vehicle according to claim 4,
**characterized in that**
the frame bars (32) of the bellows appendage (30) as well as the inlaid bars (15) are captured by the transition profile (18) with a U-shaped cross-section.

6. The articulated vehicle according to one of the afore-mentioned claims,
**characterized in that**
in the assembled state, the individual frame bars (32) of the bellows appendage (30) have straps (33) in the upper area of the bellows appendage (30), which are oriented toward the bellows side wall (10), through which an elastic traction element (40) is led, which is connected at its end to the front sides of the vehicle parts.

7. The articulated vehicle according to one of the afore-mentioned claims,
**characterized in that**
one of the middle frame bars (32) of the bellows appendage (30) is connected on both sides to the respective front side of the vehicle part by an elastic traction member (42).

8. The articulated vehicle according to one of the afore-mentioned claims,
**characterized in that**
a tension rope (45) is provided, which runs substantially horizontally and connects at least one of the middle frame bars (32) of the bellows appendage (30) with the front sides of the vehicle parts.

9. The articulated vehicle according to claim 8,
**characterized in that**
the connection of the tension rope (45) occurs in the area of the greatest bulge of the bellows appendage (39).

## Revendications

1. Véhicule articulé, par exemple bus articulé ou véhicule sur rails, comportant au moins deux parties de véhicule couplées entre elles de façon articulée, dans lequel il est prévu d'adapter respectivement une façade latérale de soufflet dans la zone des deux parois latérales, pour assurer le pontage de l'espace entre les deux parties de véhicule, qui s'étend depuis le côté frontal de l'une des parties de véhicule jusqu'au côté frontal de l'autre partie de véhicule, dans lequel la façade latérale de soufflet (10) comporte un dispositif à soufflet (30) le long de son côté intérieur en vue de rigidifier la façade latérale dans le sens transversal par rapport à l'axe longitudinal du véhicule, pourvu, sur sa longueur, de listes d'encadrement (32) profilées, repliées transversalement en U, dans lequel les listes d'encadrement (32) du dispositif à soufflet (30) sont connectées à leur extrémité par des profils de recouvrement (18) de la façade latérale de soufflet, de telle manière qu'une structure fermée est constituée, dans lequel les listes d'encadrement (32) du dispositif à soufflet (30) s'étendent sur la hauteur de la façade latérale de soufflet dans la zone de passage d'un pli ou d'une vague (11) de la façade latérale de soufflet vers un pli ou une vague adjacente, dans lequel les profils de recouvrement (18) s'étendent sur toute la hauteur de la façade latérale (10).

2. Véhicule articulé selon la revendication 1,
**caractérisé en ce que,**
les listes d'encadrement (32) du dispositif à soufflet (30) sont en prise en continu avec les plis ou les vagues (34) sur la totalité de leur longueur.

3. Véhicule articulé selon la revendication 1,
**caractérisé en ce que,**
plusieurs parties de plis ou de vagues de soufflet (34a) sont tenues par les listes d'encadrement sur la longueur des listes d'encadrement du dispositif à soufflet (30).

4. Véhicule articulé selon l'une des revendications précédentes,
**caractérisé en ce que,**
les listes d'encadrement (32) de la façade latérale (10) de soufflet sont constituées de listes rapportées (15) dans la partie ventrue du dispositif à soufflet.

5. Véhicule articulé selon la revendication 4,
**caractérisé en ce que,**
aussi bien les listes d'encadrement (32) du dispositif à soufflet (30) que les listes rapportées (15) sont constituées de profilés de recouvrement (18) ayant une section en forme de U.

6. Véhicule articulé, selon l'une des revendications précédentes,
**caractérisé en ce que,**
les listes d'encadrement individuelles (32) du dispositif à soufflet (30) comportent des attaches (33) disposées dans la partie supérieure du dispositif à soufflet (30) et orientées vers la façade latérale (10), pour permettre le guidage d'un élément de traction élastique (40) qui est lié d'un côté avec la face frontale des parties de véhicule.

7. Véhicule articulé, selon l'une des revendications précédentes,
**caractérisé en ce que,**
les listes d'encadrement centrales (32) du dispositif à soufflet (30) sont couplées par un élément élastique de traction (42) de chaque côté avec les faces frontales respectives des parties de véhicule.

8. Véhicule articulé, selon l'une des revendications précédentes,
**caractérisé en ce que,**
un élément de tension (45) est prévu, essentiellement disposé horizontalement, agencé pour relier une des listes d'encadrement centrales (32) du dispositif à soufflet (30) avec une face frontale des parties de véhicule.

9. Véhicule articulé, selon la revendication 8,
**caractérisé en ce que,**
la fixation de l'élément de tension (45) est effectuée dans la zone de la partie la plus ventrue du dispositif à soufflet (39).
